# EUROPEAN PATENT SPECIFICATION

(11) **EP 1 922 355 B1**
(45) Date of publication and mention of the grant of the patent: **11.03.2009**
(21) Application number: 06775948.0
(22) Date of filing: 25.08.2006
(51) Int. Cl.: C08G 85/00, C08G 65/10, C08G 81/02, C08G 81/00, C08J 7/12, C08G 65/32, C08J 7/04, C08H 1/00

(54) **A METHOD OF MODIFYING A MACROMOLECULAR SYSTEM**
VERFAHREN ZUR MODIFIZIERUNG EINES MAKROMOLEKULAREN SYSTEMS
PROCEDE DE MODIFICATION DE SYSTEME MACROMOLECULAIRE

(30) Priority: 26.08.2005 WO PCT/DK2005/000547; 02.03.2006 EP 06075482
(43) Date of publication of application: 21.05.2008
(60) Divisional application: 09150865.5
(73) Proprietor: NOVO NORDISK A/S, 2880 Bagsvaerd (DK)
(72) Inventor: JOHANNSEN, Ib, DK-3500 Værløse (DK); MICHAEL, Roice, DK-2000 Frederiksberg C (DK)
(74) Representative: Inspicos A/S
(86) International application number: PCT/DK2006/000461
(87) International publication number: WO 2007/022780

(56) References cited:
- EP-A1- 1 167 418
- EP-A2- 0 555 101
- WO-A-01/26692
- WO-A-97/03106
- WO-A-99/01469
- WO-A-20/04012773
- FR-A1- 2 358 394
- US-A1- 2001 044 526
- US-A1- 2003 083 389
- US-A1- 2003 161 837
- US-A1- 2004 115 615
- US-A1- 2005 014 903
- DATABASE WPI Week 200404 Derwent Publications Ltd., London, GB; AN 2004-038342 XP002404150 -& JP 2003 268099 A (KATAOKA K) 25 September 2003 (2003-09-25)
- ABRAHAM SHEENA, BRAHIM SEAN, GUISEPPI-ELIE ANTHONY: "Molecularly engineered hydrogels for implant biocompatibility" ANNUAL INTERNATIONAL CONFERENCE OF THE IEEE ENGINEERING IN MEDICINE AND BIOTECHNOLOGY, vol. 26, no. VII, 2004, pages 5036-5039, XP002404145
- WON CHEEB-YOUB: "Synthesis of heterobifunctional poly(ethylene glycol) containing an acrylol group at one end and an isocyanate group at the other end" POLYMER BULLETIN, vol. 52, 2004, pages 109-115, XP002404146
- MANTA C ET AL: "POLYETHYLENE GLYCOL AS A SPACER FOR SOLID-PHASE ENZYME IMMOBILIZATION" ENZYME AND MICROBIAL TECHNOLOGY, STONEHAM, MA, US, vol. 33, no. 7, 2003, pages 890-898, XP008069324 ISSN: 0141-0229
- YONG JOO KIM ET AL: "HETEROBIFUNCTIONAL POLY(ETHYLENE OXIDE ONE POT SYNTHESIS OF POLY(ETHYLENE OXIDE) WITH A PRIMARY AMINO GROUP AT ONE END AND A HYDROXYL GROUP AT THE OTHER END" POLYMER BULLETIN, SPRINGER, HEIDELBERG, DE, vol. 33, no. 1, 1 June 1994 (1994-06-01), pages 1-6, XP000459057 ISSN: 0170-0839
- ZHANG S ET AL: "Synthesis of heterobifunctional poly(ethylene glycol) with a primary amino group at one end and a carboxylate group at the other end" REACTIVE & FUNCTIONAL POLYMERS, ELSEVIER SCIENCE PUBLISHERS BV, NL, vol. 56, no. 1, July 2003 (2003-07), pages 17-25, XP004442204 ISSN: 1381-5148
- KREPPEL F ET AL: "Combined Genetic and Chemical Capsid Modifications Enable Flexible and Efficient De- and Retargeting of Adenovirus Vectors" MOLECULAR THERAPY, ACADEMIC PRESS, SAN DIEGO, CA,, US, vol. 12, no. 1, July 2005 (2005-07), pages 107-117, XP004974954 ISSN: 1525-0016
- DELONG SOLITAIRE A., MONN JAMES J., WEST JENNIFER L.: "Covalently immobilized gradients of bFGF on hydrogel scaffolds for directed cell migration" BIOMATERIALS, vol. 26, 2005, pages 3227-3234, XP002404147
- LIU XIAO-HUI, WANG HSU-KUN, NERRON JAMES N., PRESTWICH GLENN D.: "Photopatterning of Antibodies on biosensors" BIOCONJUGATE CHEMISTRY, vol. 11, 2000, pages 755-761, XP002404148
- MASAYUKI YOKOYAMA ET AL: "SYNTHESIS OF POLY(ETHYLENE OXIDE) WITH HETEROBIFUNCTIONAL REACTIVE GROUPS AT ITS TERMINALS BY AN ANIONIC INITIATOR" BIOCONJUGATE CHEMISTRY, ACS, WASHINGTON, DC, US, vol. 3, no. 4, 1 July 1992 (1992-07-01), pages 275-276, XP000288470 ISSN: 1043-1802

## Description

### FIELD OF THE INVENTION

The invention relates to methods of modifying a macromolecule, in particular a polymer matrix, by functionalisation with molecular entities comprising a reactive moiety, an alkylene oxide spacer arm and a functional group comprising a protected primary amine.

### BACKGROUND OF THE INVENTION

There is a growing need for making specific functionalisation of various macromolecular systems (in short macromolecules) including large biomolecules and polymeric materials. A primary amine is a very versatile functional group, which can be used both a starting point for various chemical reactions and for modifying the physiochemical properties of the macromolecular system.

For many applications, it is furthermore required to have the functional group attached to the macromolecular system via a long chemical spacer arm in order to ensure optimal access to the functional group. Poly- or oligo-alkylene oxides represent a family of molecular fragments that can be used for such functional arms, while exhibiting a high compatibility towards biological or chemical environments depending on the application.

The macromolecular systems where such molecular entities are useful for forming amine functionalised products include biological molecules such as proteins and nucleotides, beaded materials for peptide synthesis, resins for chromatography, polymeric materials for filtration, as well as surface layers for use in medicinal components, in vivo or in vitro diagnostic components, analytical systems, etc.

In the literature, there are a number of methods for introducing primary amines as functional groups on polymer resins used for applications such as solid phase synthesis or chromatography. Most of these methods attach the amine group on the polymer backbone either directly or via a short (less than 10 atom) linker. Examples of that is the direct reaction of a deprotonated phthalimide with a primary alkyl halide followed by hydrazinolysis of the imide, and the reaction of azide with alkyl halides or tosylates followed by reduction. Also the reaction of bromoethyl phthalimide with alkoxide moieties on the macromolecule followed by hydrazinolysis has proven useful in some cases. In some cases, the primary amine functionality has been obtained as a terminal functional group on a long alkoxide spacer arm attached to a polymer resin. In these cases, the primary amine - alkoxide spacer arm moiety is formed in a stepwise fashion i.e. the alkoxide spacer arm is attached followed by the attachment of the primary amine to the alkoxide spacer arm using reactions as described above. The chemistry involved in the methods described above requires quite harsh conditions which often are incompatible with the macromolecular systems. Especially biological macromolecules are degraded, but also resins used for chromatography can be harmed under such conditions. In the later case this is especially important for macroporous resins where the harsh condition will alter the porosity of the resins. In addition, the mentioned reactions rarely are quantitative, which give rise to undesired side products.

Examples of unsymmetrical alkylene oxides prepared from ethylene glycol in which one terminal group is an amine and one terminal group is a hydroxide do exist. These compounds mainly exist as short oligomeric versions where the separation from the symmetrical alkylene oxides is possible. Moreover, the high cost of producing these molecules and the difficulty in selectively converting the hydroxy functionality into a reactive group that can be reacted with a macromolecular system strongly limit the industrial applicability of these compounds for the functionalisation of macromolecular systems.

Examples of unsymmetrical peg prepared by direct ethoxylation of an ethanolamine with a amide or imide protection group have been described in the literature.

Lange and Wahl (Bull. Chim. Soc. Fr. 1951, 340-342) described the ethoxylation of N-acetylethanoamine forming mono and diethoxylated derivatives. Lontjens et al. (Polym. Bull. 30, 1993 pp. 489-494) describe the synthesis of monoamino polyethylene glycols in a high temperature ethoxylation process, which does create a number of by-products. Y-I Huang (J.polym. Sci. 23, 1985, pp. 795-799) describe the ethoxylation of an ethanolamine-benzaldehyde Shiff-base followed by hydrolysis to the monoamine-substituted polyethylene glycol. In these last two examples, the product was reacted via the primary amine primary amine to form the polymeric entities leaving a free hydroxyl group. In no case, a primary amine derivative was obtained.

Thus, there is a need in the art for molecular entities, which allow the efficient and inexpensive functionalisation of macromolecular systems with an alkoxide spacer arm and a primary amine functionality.

### BRIEF DESCRIPTION OF THE FIGURE

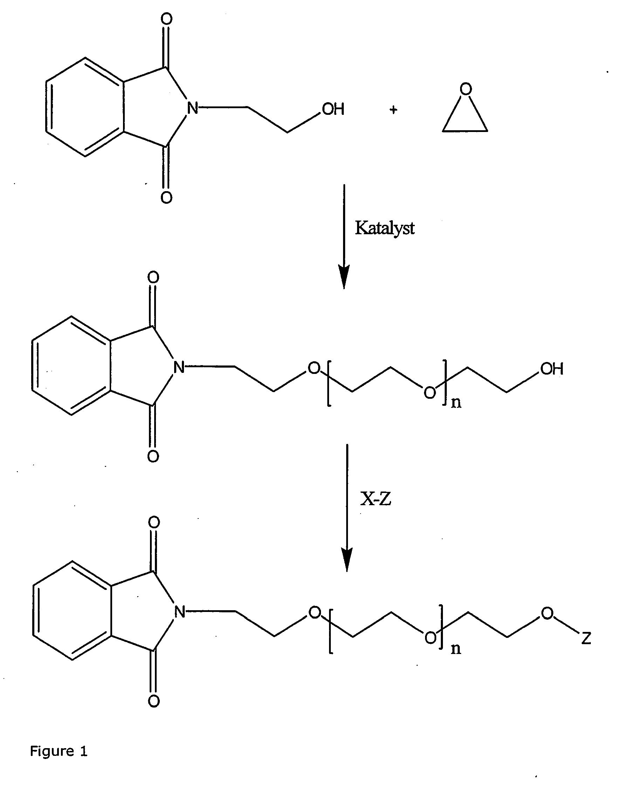

Figure 1 illustrates the preparation of the compound of the general formula (I); m is 1, n in Figure 1 corresponds to n-1 in formula (I), and Z in Figure 1 corresponds to X in formula (I).

### DESCRIPTION OF THE INVENTION

The present invention relates to a method of modifying a macromolecule, in particular a polymer matrix, e.g. polymer matrixes used as solid supports for synthesis as well as for chromatographic purposes.

In particular, the present invention relates to a method of modifying a macromolecule, in particular a polymer matrix, the method comprising the steps of
(i) providing the macromolecule (e.g. polymer matrix);
(ii) providing a compound of the general formula (I): 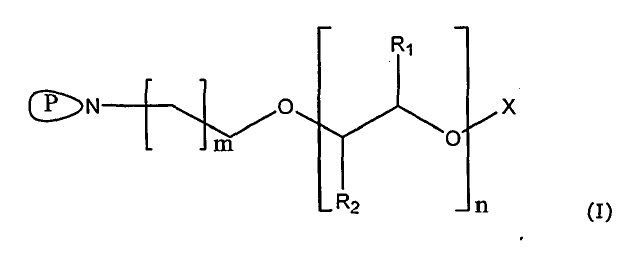 wherein
   N is a primary amino group protected with the protecting group P, wherein the protecting group involves both free valences of the primary amino group;
   m is an integer of 1-12 and n is an integer of 1-2000;
   R¹ and R² are independently selected from the group consisting of hydrogen and C₁₋₄-alkyl; and
   X is a reactive group; and
(iii) allowing the compound of the general formula (I) to react with the macromolecule (e.g. polymer matrix) so as to form grafts on said macromolecule.

### Compounds of the general formula (I)

The compound useful for the modification of macromolecules, in particular polymer matrixes, can be represented by compounds of the general formula (I): 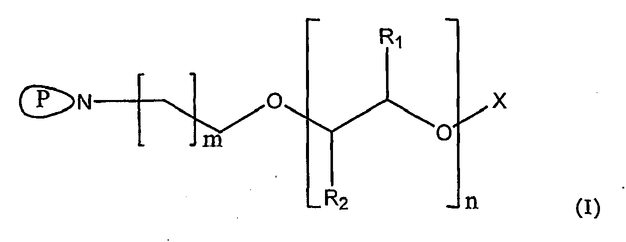 wherein
N is a primary amino group protected with the protecting group P, wherein the protecting group involves both free valences of the primary amino group;
m is an integer of 1-12 and n is an integer of 1-2000;
R¹ and R² are independently selected from the group consisting of hydrogen and C₁₋₄-alkyl; and
X is a reactive group.

It will be appreciated that the compounds of the general formula (I) are of the "protected amino"-poly(oxyalkylene)-type. Hence, the methods are suitable for introducing into macromolecules (e.g. polymer matrixes) a primary amino group via a generally hydrophilic linker.

The compounds of the general formula (I) comprise a {P}-N moiety, representing a primary amino group protected with the protecting group P, wherein the protecting group involves both free valences of the primary amino group.

Protecting groups involving both free valences of the primary amino group are typically those of the imide type [(RC(=O))₂N-] and of the imine type [R-C=N-].

For example, protecting groups of the imide type may be those selected from succinic anhydrides/succinic acids (succinimides) and phthalic anhydrides/phthalic acids (phthalimides).

In one currently preferred embodiment, the protecting group is of the imide type. Currently most preferred protecting groups are succinic anhydride/succinic acids (succinimides) and phthalic anhydride/phthalic acids (phthalimides), in particular phthalic anhydride/phthalic acids (phthalimides).
m is an integer of 1-12, e.g. 1-6, such as 1-4, or 1-3, or 1-3, or 1-2, in particular 1. n is an integer of 1-2000, more typically 1-100, or 1-50, or 1-10 or 1-8, such as 1-6, or 1-5, or 1-4, or 1-3, 1-2, or 2-6, or 2-4, or 1.
R¹ and R² are independently selected from the group consisting of hydrogen and C₁₋₄-alkyl.
C₁₋₄-alkyl encompasses methyl, ethyl, 1-propyl, 2-propyl, 1-butyl, 2-butyl, tert-butyl and (2-methyl)-prop-1-yl.

Particular examples are those where R¹ and R² are independently selected from hydrogen and methyl, hence compounds having ethylene glycol and propylene glycol fragments. The currently most preferred embodiments are those where all of R¹ and R² are hydrogen, i.e. corresponding to compounds having ethylene glycol fragments.

The reactive group is designed to be capable of reacting with simple functionalities on the macromolecule (e.g. polymer matrix), e.g. amines, alcohol and thiol functionalities, possibly after activation of such groups. For this purpose, reactive groups containing small cyclic ether such as oxiranes (epoxides) and oxethanes can be used, but also functional groups such as isocyanates, carboxylic acids, acid chlorides or activated vinylic compounds may be used. Particular examples are reactive groups containing oxiranes and oxethanes of which a suitable oxirane-containing reactive groups (X) may be the one derived from epichlorohydrin (see Example 5). An alternative example of a reactive group is a carboxylic acid-containing reactive group, e.g. as illustrated in Example 7. For both of these examples, a CH₂ group is included as a part of the reactive group X, cf. CH₂(O)CHCH₂- in Example 5 and HOOCCH₂- in Example 7.

### Preparation of compounds of the general formula (I)

In a preferred embodiment of the invention, the molecular entity is formed via the polyalkoxylation of an N-protected hydroxy alkylamine, followed by the attachment of the reactive moiety via a C-O bond. This is a cost efficient route to unsymmetrical polyalkylene oxides, by careful selection of catalysts and reaction time the good control of chain length and purity can be obtained. Moreover, by varying the content of alkylene oxides such as ethylene oxide and propylene oxide the molecular structure and hydrophilicity of the product can be controlled.

### Synthesis of protected polyethylenglycol-alkylamines

The starting point for this synthesis is the protected hydroxy alkylamine (b). Examples of simple, useful alkyl amines include ethanolamine, 3-hydproxypropylamine, 2-hydroxypropylamine. Also more complex amines such as 3-oxy-5-hydroxy-1-pentanamine or 4-hydroxymethyl-benzylamine can be used.

The amine group on the hydroxyalkyl amine (a) is protected with a protecting group which allows the ethoxylation and subsequent attachment of the reactive moiety. Protection groups such as imides, amides, imines or urea derivatives are quite useful for this purpose. The phthalimide protected amine formed from ethanolamine and phthalic anhydride is commercially available in large scale. Compared with simple amide protection, it has the advantage that there are no hydrogen left on the nitrogen atom and as a result it is stable towards nuclephilic attack in subsequent transformations. This is particularly important since the amide proton in regular amide protected amines has a similar acid strength as the terminal hydroxy group in the polyalkoxide, which gives rise to ill defined substitution reactions.

Once the amine group is protected, the free hydroxy group can be reacted with oxiranes in presence of a catalyst to form the polyalkoxy derivative (c). Commonly used oxiranes include ethyleneoxide and propyleneoxide or mixtures thereof. The selection of catalyst and the reaction conditions are particularly important. The conditions previously reported for the reaction between 2-hydroxyethylphthalimide and ethyleneoxide involve high sodium hydroxide catalyst concentrations and temperatures above 160°C, conditions which invariably give rise to highly coloured products with a large molecular weight variations and high levels of impurities. As exemplified in this patent lowering of the temperature and the concentration of catalyst give products of acceptable purity. Application of lanthanum or lanthanide based catalysts give very pure, almost colourless products, with narrow molecular weight distribution.

Polyalkoxides based on ethyleneoxide are very hydrophilic and biocompatible. Use of propylene oxide instead of ethylene oxide results in molecules that are comparatively less soluble in water and exhibits some degree of hydrophobic interaction with biomolecules. The two monomers can be copolymerised to tailor the hydrophilicity even further.

The polyalkoxy derivative is then functionalised with a reactive moiety to form the desired molecular entity, which is used to modify macromolecular systems. The reactive moiety should be able to react with functional groups on the macromolecular system such as amines, alcohols, thioles, etc. as discussed above.

The present invention provides - in one embodiment - a method for the preparation of a compound of the general formula (I) 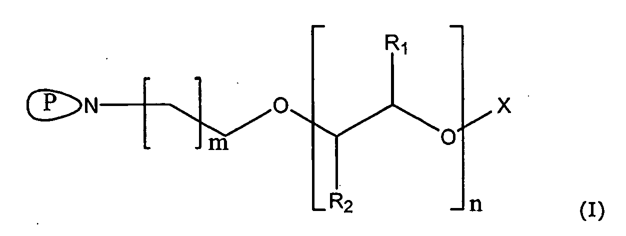 wherein {P}-N is a phthalimido group, m is an integer of 1-12, n is an integer of 1-2000, R¹ and R² are both hydrogen, and X is a reactive group, said method comprising the steps of:
(a) providing a phthalimido N-protected. α-hydroxy-ω-amino-C₂₋₁₃-alkane;
(b) reacting said alkane with ethylene oxide in the presence of a catalyst; and
(c) converting of functionalizing the terminal OH group of the product obtained in step (b).

The reaction in step (b) is preferably conducted in the absence of atmospheric air (in particular oxygen). Moreover, the reaction is typically conducted under pressure, e.g. 2-10 bar, and at elevated temperature, e.g. 80-200°C, such as 100-190°C. The amount of catalyst is typically 0.1-3% based on the amount of phthalimido N-protected α-hydroxy-ω-amino-C₂-₁₃-alkane, where the necessary amount correlates with the equivalents of ethylene oxide used, i.e. the more equivalents ethylene oxide used, the higher the amount of catalyst. The number of equivalents of ethylene oxide used corresponds to the desirable chain length, i.e. the number "n" in the general formula (I). Suitable catalysts are, e.g., those selected from NaOH, KOH, KOCH₃, MEO-3, and MEO-LA.

The conversion i step (c) is conducted in order to introduce the reactive group X, either coupling of a reactive group to the molecule via the oxygen atom, or by converting the terminal hydroxyl functionality, e.g. by oxidation to the corresponding carboxylic acid. This is illustrated in the Examples section.

### Grafting of a compound of the general formula (I) onto macromolecules

The complete molecular entity is then used to modify macromolecular systems (macromolecules) such as polymer matrixes, biomolecules (enzymes, proteins, etc.), and materials surfaces. In the cases where the reactive group on the macromolecular system is an amine group, the reaction will quite often proceed without a catalyst whereas some catalysts are often needed in the reaction with hydroxyl groups (i.e. alcohols).

Illustrative examples of suitable polymer matrixes are those selected from PS, POEPS, POEPOP, SPOCC, PEGA, CLEAR, HYDRA, PEG-polyacrylate copolymers, polyether-polyamine copolymers, and cross-linked polyethylene di-amines, Expansin, Polyamide, Jandagel, PS-BDODMA, PS-HDODA, PS-TTEGDA, PS-TEGDA, GDMA-PMMA, PS-TRPGDA, ArgoGel, Argopore resins, Toyopearl, other cross-linked polyacrylates high capacity PEGA, Fractogel, Sephadex, Sepharose, other cross-linked agaroses, and derivatives of the aforementioned.

In a final step, the protection group of the terminal primary amine on the alkoxide side-chain may be removed. Phthalimide protection groups are removed by treatment with solutions containing hydrazine or ethylenediamine, whereas imine type protection groups can be hydrolysed under even milder conditions using low concentrations of acids or bases in water. Amide type protection groups most often require strong base treatment at elevated temperatures and are thus less favourable.

Using the above procedure, macromolecular systems can be rendered functional side-arms of desired hydrophilicity with an easily accessible primary amine as an end group. Such macromolecular systems may be used as such or modified further via chemical modification of the amine group.

The amine group may be used as a starting point for solid phase chemistry or may be used as an attachment point for more complex molecules, such as proteins, nucleotides or affinity ligands.

In summary, the invention consists in the formation of specific molecular entities and the use of these entities for the modification of macromolecular systems. The formation consists of 4 steps:
1. Alkoxylation of a N-protected hydroxy alkyl amine.
2. Attachment of an reactive moiety via the free hydroxy terminal of the polyalkyleneoxide.
3. Reaction of the reactive moiety with functional groups of the macromolecular system.
4. Removal of the N-protective group in order to release a primary amine.

### Specific embodiments

In a particular embodiment, the present invention relates to a method of modifying a macromolecule, in particular a polymer matrix, the method comprising the steps of
(i) providing the macromolecule (e.g. polymer matrix);
(ii) providing a compound of the general formula (I): 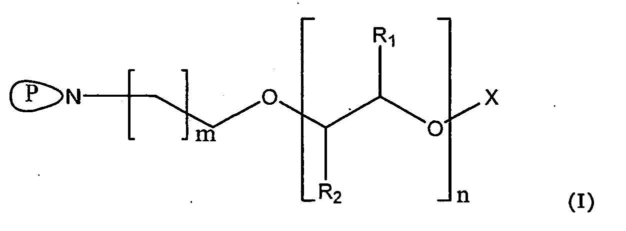 wherein
   {P}-N is a phthalimido group;
   m is 1 and n is an integer of 1-100;
   R¹ and R² are both hydrogen; and
   X is a reactive group, such as selected from oxethane-containing reactive groups and oxirane-containing reactive groups, in particular oxethane-containing reactive groups or oxirane-containing reactive groups; and
(iii) allowing the compound of the general formula (I) to react with the macromolecule (e.g. polymer matrix) so as to form grafts on said macromolecule.

In a further particular embodiment, the invention provides a compound of the general formula (I): 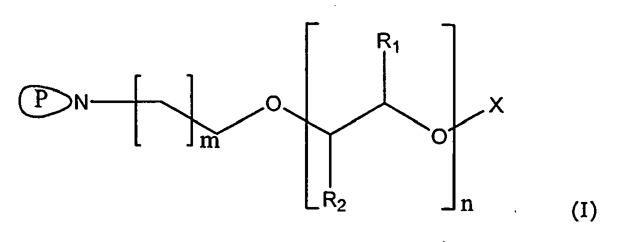 wherein
{P}-N is a phthalimido group;
m is 1 and n is an integer of 1-100;
R¹ and R² are both hydrogen; and
X is an oxethane-containing reactive group or an oxirane-containing reactive group.

In these embodiments, X preferably represents CH₂(O)CHCH₂- (oxiranyl-methyl).

### Alternative embodiments

Although the macromolecules referred to herein are mostly based on skeletons derived from organic molecules, it is - in alternative embodiment - envisaged that the method defined herein may be useful for modifying glass substrates (e.g. plates, beads, sticks, etc.). In such instances, the reactive group (X in the compound of the general formula (I)) should be capable of reacting with Si-OH surface groups of the glass substrate in question or surface groups of already derivatised glass substrates. Hence, a suitable reactive group will often be of the silane type.

In a further alternative, it is envisaged that the reactive group X of the compound of the general formula (I) may simply be an electron pair, i.e. that -CH₂-O-X is -CH₂-O⁻, corresponding to a deprotonated terminal -CH₂-OH group of the polyalkyleneoxide chain. Such a reactive group may, e.g., react with epoxide groups of the macromolecule.

### EXAMPLES

### Example 1 - Alkoxylation of N-(2-hydroxyethyl)-phthalimide

The synthesis was performed in a 3 liter autoclave equipped with heating mantle, internal cooling coil and mechanical stirrer.

The catalyst was added to 300 g of N-(2-hydroxyethyl)-phthalimide (HPI, Katwijk Chemie bv, NL). The reactor charge was dried at 130°C by nitrogen purge for 20 minutes. Afterwards, ethylene oxide was added at the selected temperature in a way to keep the overpressure at the level between 3-5 bar. (See table below). After introduction of 640 g ethylene oxide (EO), the product was cooked out 30 minutes at the reaction temperature. The obtained ethoxylate was discharged at 40°C and weighed.

| | Catalyst | Amount | Temperature | EO eq. | Yield | Purity | Appearance |
|---|---|---|---|---|---|---|---|
| 1 | NaOH | 0.5 g | 170°C | 15.7 | 970 g | +85% | Brown liq. |
| 2 | KOH | 5 g | 160°C | App. 15 | 950 g | ~50% | Dark brown liq. |
| 3 | KOCH₃ | 1.6 g | 130°C | 15.2 | 970 g | +60% | Brown liq |
| 4 | MEO-3 | 1.5 g | 130°C | 14.5 | 940 g | +95% | Light tan liq. |
| 5 | MEO-LA | 0.9 | 140°C | 2.5 | 470 g | +95% | Tan liq. |
| 6 | MEO-LA | 2.0 g | 140°C | 10 | No data | +95% | Tan liq. |
| 7 | MEO-LA | 2.9 g | 140°C | 33.6 | 2600 g | No data | Hard cream coloured solid |

The MEO-3 and the MEO-LA catalysts are heterogeneous Lanthanum catalysts developed by Mexeo, PI. Purities are estimated on the basis of Maldi Tof spectra.

### Example 2 - Functionalisation of alkoxylated N-(2-hydroxyethyl)-phthalimide with epichlorhydrin

The alkoxylated N-(2-hydroxyethyl)-phthalimide prepared as described in Example 1 using the MEO-3 catalyst was dried by azeotropic evaporation of acetonitrile (5 mL/g PEG, 2x) and dissolved in THF (5 mL/g PEG) with stirring and exclusion of moisture. Sodium hydride [60 wt % dispersion in mineral oil] was added in small portions to the PEG-solution with stirring and exclusion of moisture. The deprotonation reaction was stirred at room temperature for 2h. Epichlorohydrin was added dropwise and the reaction was stirred at 40°C for 12h. The solvent was evaporated *in vacuo* and the residue was mixed with acetonitrile (25 mL). The precipitated sodium salt was separated by centrifugation at 8000 r.p.m. for 20 min and the supernatant was decanted and evaporated *in vacuo.* The products were washed with heptane (3x25 mL) to remove mineral oil and dried under high vacuum.

### Example 3 - Grafting onto a polymer matrix

The product of Example 2 is grafted onto a polymer matrix as in Example 9.

### Example 4 - Hydrolysis of a phthalimide derivatised polymer matrix

The polymer matrix obtained in Example 3 is washed in a glass filter funnel with 150 mL methanol followed by the washing with 150 mL butanol. After draining off the solvent, another 50 mL of butanol is added to the beaker and left at room temperature for 2 h. The butanol is drained off and the resin is placed in a round bottom flask. To the resin, 11 mL of ethylene diamine is added followed by the addition of 30 mL of butanol. The mixture is stirred and heated to 90°C for 15 h under inert atmosphere. The resultant product is washed with water followed by 0.5 M HCl until the pH is approx. 1-2. The resin is then drained from solvent and covered with 2 M HCl. The mixture is stirred and heated to 90°C for 2 h. Finally, the resin is washed thoroughly with 1 M NaOH followed by water.

### Example 5 - Preparation of Oxirane-PEG phthalimide

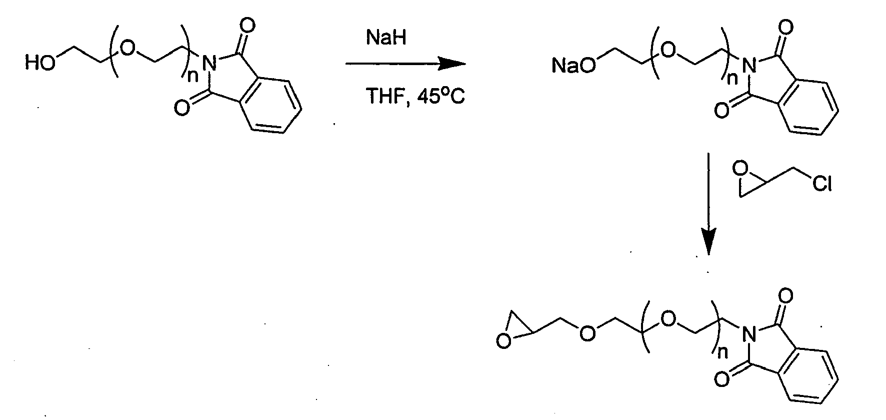

Dissolve PEG-phthalimide prepared as described in Example 1 using the MEO-3 catalyst (1 equiv) in THF (5 mL) and add sodium hydride (60% oil) (1 equiv) with stirring. After 6 h, add epichlorohydrin (1.5 equiv) drop wise to the reaction mixture at 45°C and allowed to stir for 16 h. Add DCM to the reaction mixture, filter off the insoluble impurities. Evaporate the solvent in vacuum to yield the product.

### Example 6 - Preparation of VO-2000-PEG-amine

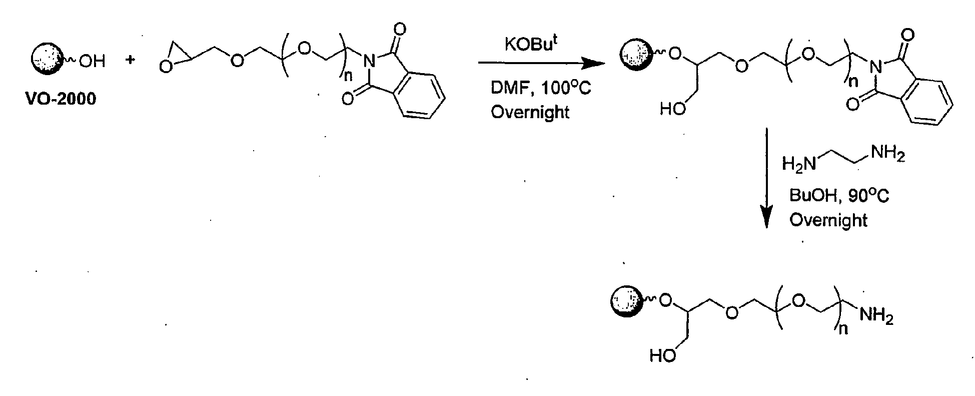

VO-2000 resin (An oxethane cross-linked PEG based resin commercialised by VersaMatrix A/S) (0.5 mmol OH) washed with DMF and add KOBu^{t} (4 equiv) in DMF (5 mL). Keep the reaction mixture at 100°C and flush with argon. Add oxirane-PEG phthalimide prepared as described in Example 1 using the MEO-3 catalyst (4 equiv) in DMF (5 mL) to the reaction mixture and the reaction allowed to continue for overnight. Filter off the resin, wash with DMF, ethanol, water, ethanol and butanol. Add ethylenediamine (5 equiv) to the resin in butanol and keep the reaction mixture at 90°C for overnight. Wash the resin with butanol, ethanol, water, ethanol, DMF and DCM.

### Analysis: Kaiser test is positive.

*Loading:* Fmoc-Gly-OH was attached to the resin with TBTU/NEM activation method. The Fmoc group on the pre-weighed resin was cleaved off with 20% piperidine in DMF and the absorbance of the piperidine-fulvene adduct measured at 290 nm and the amino loading of the resin calculated from the OD value. Measured loading = 0.69 mmol/g

### Example 7 - Preparation of Carboxyl PEG-phthalimide

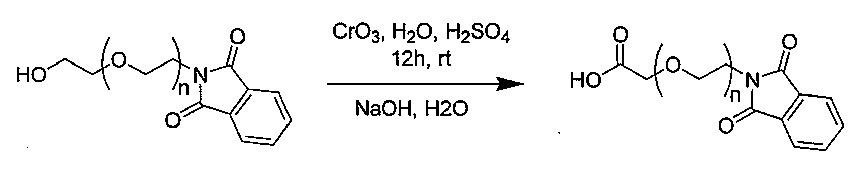

Dissolve PEG-phthalimide prepared as described in Example 1 using the MEO-3 catalyst (1 equiv) in 25 mL water/8 mL conc. H₂SO₄ and add CrO₃ in 5 mL water. Stir the solution for 16 h at room temperature. Add 25 mL of water to the reaction mixture and extracted with DCM (3x). Combine the organic layers and washed with water (2x) and saturated NaOH (2x) and dry the organic fraction over Na₂SO₄ and concentrate in vacuum.

### Example 8 - Preparation of VA-1900PEG-amine

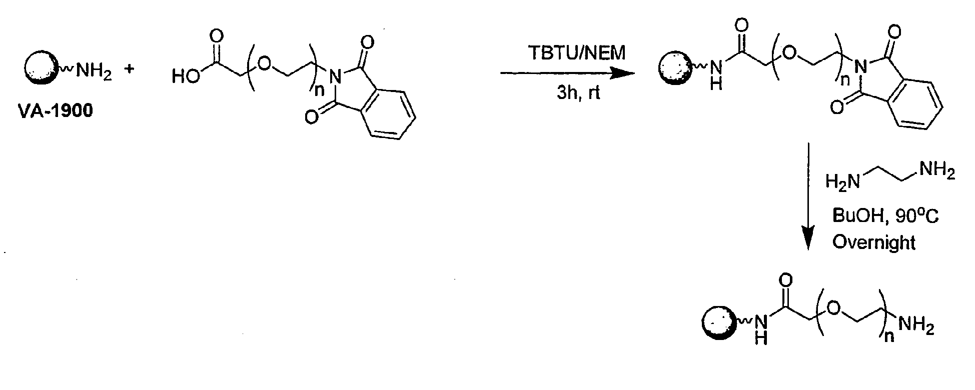

VA-1900 resin (An acrylamide cross-linked PEG based resin with average PEG chain length is 1900 Dalton commercialised by VersaMatrix A/S) (0.017 mmol NH₂) washed with DMF and add carboxyl-PEG phthalimide prepared as described in Example 7 (10 equiv), TBTU (9.6 equiv) and NEM (13.3 equiv) in DMF to the resin and the reaction allowed to continue for 3 h. Filter off the resin, wash with DMF, ethanol, water, ethanol and butanol. Add ethylenediamine (5 equiv) to the resin in butanol and keep the reaction mixture at 90°C for overnight. Wash the resin with butanol, ethanol, water, ethanol, DMF and DCM.

### Analysis: Kaiser test is positive.

*Loading:* Fmoc-Gly-OH was attached to the resin with TBTU/NEM activation method. The Fmoc group on the pre-weighed resin was cleaved off with 20% piperidine in DMF and the absorbance of the piperidine-fulvene adduct measured at 290 nm and the amino loading of the resin calculated from the OD value. Measured loading = 0.27 mmol/g

### Example 9 - Derivatization of Acrylate Resin

15 mL epoxyacrylate resin was washed with distilled water, ethanol and THF and surplus THF were removed by suction. 11.4 g PEG-phthalimide (4 equiv) was dissolved in 6 mL THF and 720 mg sodium hydride (4 equiv) was added. The reaction was violent creating lot of foam. The solution was then added to the resin + 4 mL THF. The coupling proceeded at 45 degrees overnight. The resin was washed with THF, ethanol, water, ethanol and finally butanol. 1.5 mL ethylenediamine was added to 9 mL butanol and added to the resin. The reaction proceeded at 90 degrees overnight. The resin was washed with butanol, ethanol and water.

### Analysis: A Kaiser test was performed on a few beads and turned blue and positive indicating the presence of primary amines on the resin.

*Loading:* 15 mL amino-PEG-resin was washed with water, ethanol and DMF but interstitial DMF was not removed by suction. Fmoc-Gly 5.35 g (4 equiv.) and TBTU 5.78 g (4 equiv) and NEM 2.27 mL (4 equiv) were mixed in 18 mL and added to the resin. The coupling was performed at room temperature over the weekend. After the weekend, a 100 µL aliquot off beads was taken out for Fmoc-loading test which gave a loading of 307 µmol NH₂/g dry resin.

## Claims

1. A method of modifying a macromolecule, the method comprising the steps of
(i) providing the macromolecule;
(ii) providing a compound of the general formula (I): 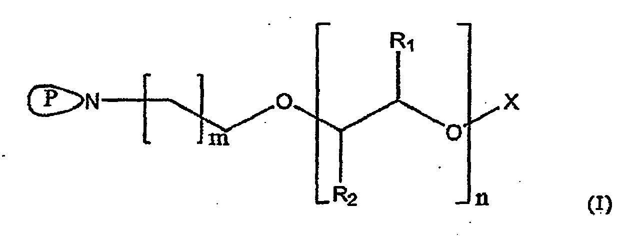 wherein
N is a primary amino group protected with the protecting group P, wherein the protecting group involves both free valences of the primary amino group;
m is an integer of 1-12 and n is an integer of 1-2000;
R¹ and R² are independently selected from the group consisting of hydrogen and C₁₋₄-alkyl; and
X is a reactive group selected from oxethane-containing reactive groups and oxirane-containing reactive groups; and
(iii) allowing the compound of the general formula (I) to react with the macromolecules so as to form grafts on the macromolecule.

2. The method according to claim 1, wherein the macromolecule is a polymer matrix.

3. The method according to any one of the preceding claims, wherein the protecting group {P}-N is a phthalimido group.

4. The method according to any one of the preceding claims, wherein the protecting group {P}-N is a phthalimido group, m is 1, n is 1-10

5. A method according to claim 1, comprising the steps of
(i) providing the macromolecule;
(ii) providing a compound of the general formula (I): 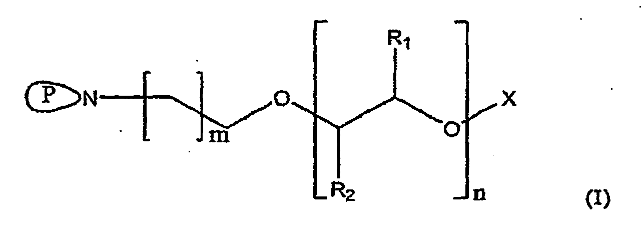 wherein
{P}-N is a phthalimido group;
m Is 1 and n is an integer of 1-100;
R¹ and R² are both hydrogen;
and
(iii) allowing the compound of the general formula (I) to react with the macromolecule so as to form grafts on said macromolecule.

6. A compound of the general formula (I): 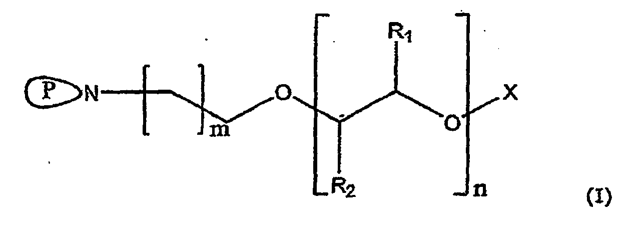 wherein
{P}-N is a phthalimido group;
m is 1 and n is an Integer of 1-100;
R¹ and R² are both hydrogen; and
X is an oxethane-containing reactive group or an oxirane-containing reactive group.

7. A method for the preparation of a compound of the general formula (I) 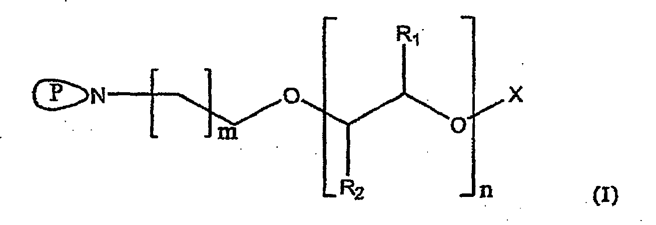 wherein {P}-N is a phthalimido group, m is an integer of 1-12, n is an integer of 1-2000, R¹ and R² are both hydrogen, and X is a reactive group selected from oxethane-containing reactive groups and oxirane-containing reactive groups, said method comprising the steps of:
(a) providing a phthalimido N-protected α-hydroxy-ω-amino-C₂₋₁₃-alkane;
(b) reacting said alkane with ethylene oxide in the presence of a catalyst; and
(c) converting or functionalizing the terminal OH group of the product obtained In step (b).

## Patentansprüche

1. Verfahren zum Verändern eines Makromoleküls mit den Schritten:
(i) Bereitstellen des Makromoleküls,
(ii) Bereitstellen einer Verbindung gemäß der allgemeinen Formel (I): 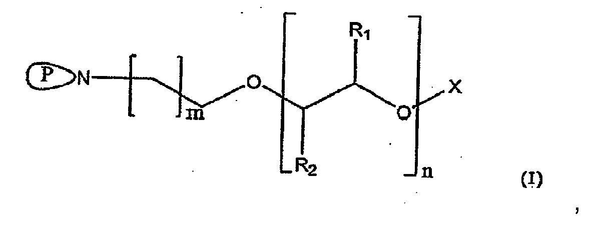 wobei
N eine von der Schutzgruppe P geschützte primäre Aminogruppe ist, wobei die Schutzgruppe beide freien Valenzen der primären Aminogruppe einbindet,
m eine ganze Zahl von 1 bis 12 und n eine ganze Zahl von 1 bis 2000 sind,
R₁ und R₂ unabhängig voneinander aus der Gruppe ausgewählt sind, die Wasserstoff und C₁₋₄-Alkylreste enthält, und
X eine reaktive Gruppe ist, die aus Oxethan enthaltenden reaktiven Gruppen und aus Oxiran enthaltenden reaktiven Gruppen ausgewählt ist, und
(iii) Zulassen einer Reaktion der Verbindung gemäß der allgemeinen Fromel (I) mit dem Markomolekül zum Ausbilden von Propfen auf dem Makromolekül.

2. Verfahren nach Anspruch 1, wobei das Makromolekül eine Polymermatrix ist.

3. Verfahren nach einem der vorhergehenden Ansprüche, wobei die Schutzgruppe {P}-N eine Phthalimido-Gruppe ist.

4. Verfahren nach einem der vorhergehenden Ansprüche, wobei die Schutzgruppe {P}-N eine Phthalimido-Gruppe, m gleich 1 ist, und n eine Zahl von 1 bis 10 ist.

5. Verfahren nach Anspruch 1 mit den Schritten:
(i) Bereitstellen des Makromoleküls,
(ii) Bereitstellen einer Verbindung gemäß der allgemeinen Formel (I): 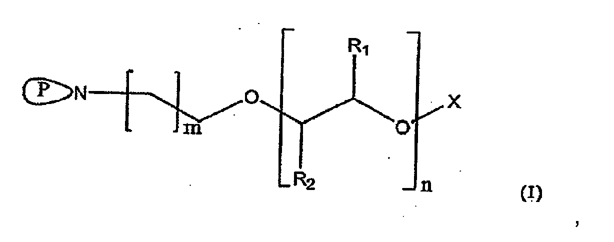 wobei {P}-N eine Phthalimido-Gruppe ist,
m gleich 1 und n eine ganze Zahl von 1 bis 100 sind,
sowohl R₁ als auch R₂ Wasserstoff sind und
(iii) Zulassen einer Reaktion der Verbindung gemäß der allgemeinen Fromel (I) mit dem Markomolekül zum Ausbilden von Propfen auf dem besagten Makromolekül.

6. Verbindung gemäß der allgemeinen Formel (I): 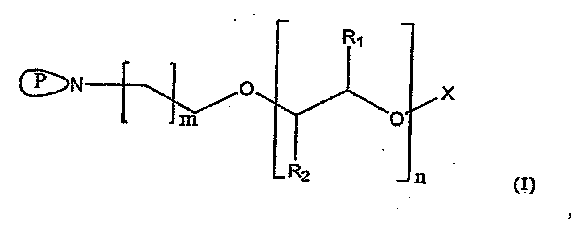 wobei
{P}-N eine Phthalimido-Gruppe ist,
m gleich1 und n eine ganze Zahl von 1 bis 100 sind,
sowohl R₁ als auch R₂ Wasserstoff sind, und
X eine Oxethan enthaltende reaktive Gruppe oder eine Oxiran enthaltende reaktive Gruppen ist.

7. Verfahren zur Herstellung einer Verbindung gemäß der allgemeinen Formel. 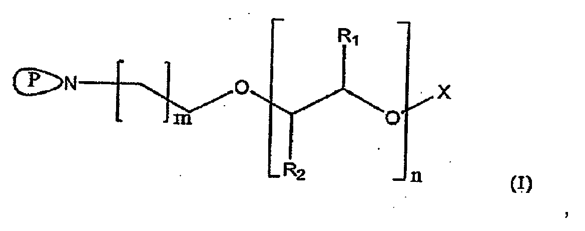 wobei {P}-N eine Phthalimido-Gruppe, m eine ganze Zahl von 1 bis 12 und n eine ganze Zahl von 1 bis 2000, sowohl R₁ als auch R₂ Wasserstoff sind, und X eine reaktive Gruppe ist, die aus Oxethan enthaltenden reaktiven Gruppen und aus Oxiran enthaltenden reaktiven Gruppen ausgewählt ist, wobei das besagte Verfahren folgende Schritte aufweist:
(a) Bereistellen eines an seinem Aminogruppenende durch eine Phthalimido-Gruppe geschützten α-Hydroxy- ω-amino-C₂₋₁₃-alkans,
(b) Umsetzen des besagten Alkans mit Ethylenoxid in Anwesenheit eines Katalysators und
(c) Umwandeln oder Funktionalisieren der endständigen OH-Gruppe des in Schritt (b) erhaltenen Erzeugnisses.

## Revendications

1. Procédé de modification d'une macromolécule, le procédé comprenant les étapes consistant à
(I) fournir la macromolécule ;
(II) fournir un composé de formule générale (I) : 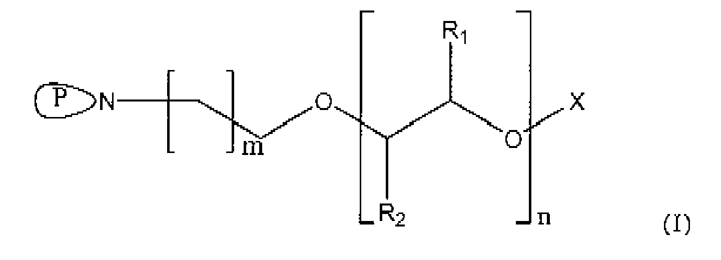 dans laquelle
N est un groupe amino primaire protégé par le groupe de protection P, le groupe de protection impliquant les deux valences libres du groupe amino primaire,
m est un nombre entier de 1 à 12 et n est un nombre entier de 1 à 2000 ;
R¹ et R² sont indépendamment choisis dans le groupe constitué par un atome d'hydrogène et un groupe alkyle en C₁₋₄ ; et
X est choisi parmi les groupes réactifs contenant un oxéthane et les groupes réactifs contenant un oxirane ; et
(III) laisser le composé de formule générale (I) réagir avec la macromolécule de manière à former des greffes sur la macromolécule.

2. Procédé selon la revendication 1, dans lequel la macromolécule est une matrice polymère.

3. Procédé selon l'une quelconque des revendications précédentes, dans lequel le groupe de protection {P}-N est un groupe phtalimido.

4. Procédé selon l'une quelconque des revendications précédentes, dans lequel le groupe de protection {P}-N est un groupe phtalimido, m vaut 1, et n vaut de 1 à 10.

5. Procédé selon la revendication 1, comprenant les étapes consistant à :
(I) fournir la macromolécule ;
(II) fournir un composé de formule générale (I) : 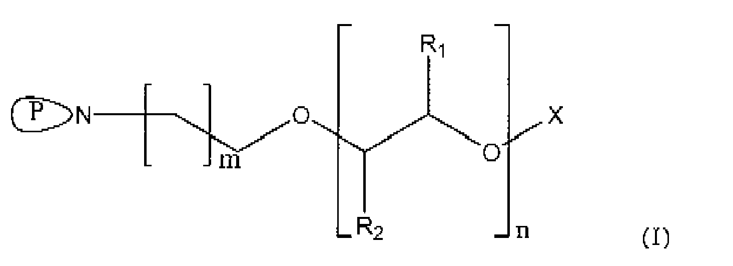 dans laquelle
{P}-N est un groupe phtalimido ;
m vaut 1, n est un nombre entier de 1 à 100 ; et R¹ et R² sont tous deux un atome d'hydrogène ; et
(III) laisser le composé de formule générale (I) réagir avec la macromolécule de manière à former des greffes sur ladite macromolécule.

6. Composé de formule générale (I) : 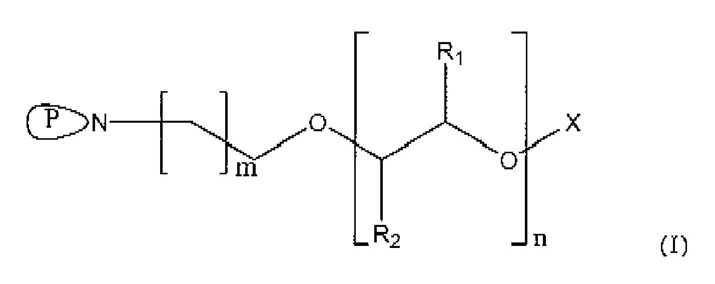 dans laquelle
{P}-N est un groupe phtalimido ;
m vaut 1, n est un nombre entier de 1 à 100 ;
R¹ et R² sont tous deux un atome d'hydrogène ; et
X est un groupe réactif contenant un oxéthane ou un groupe réactif contenant un oxirane.

7. Procédé de préparation d'un composé de formule générale (1) : 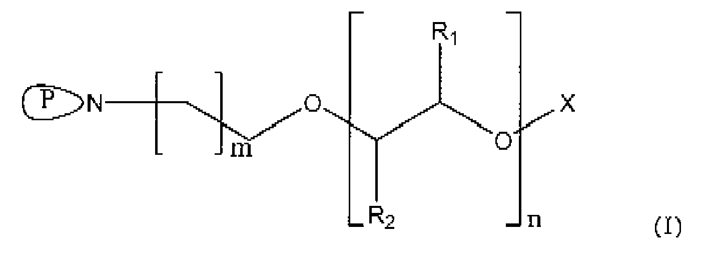 dans laquelle {P}-N est un groupe phtalimido, m est un nombre entier de 1 à 12, n est un nombre entier de 1 à 2000, R¹ et R² sont tous deux un atome d'hydrogène, et X est choisi parmi les groupes réactifs contenant un oxéthane et les groupes réactifs contenant un oxirane, ledit procédé comprenant les étapes consistant à :
(a) fournir un α-hydroxy-ω-amino-alcane en C₂₋₁₃ protégé en N par un phtalimido ;
(b) faire réagir ledit alcane avec un oxyde d'éthylène en présence d'un catalyseur ; et
(c) convertir la fonctionnalité du groupe OH terminal du produit obtenu dans l'étape (b).
